# EUROPEAN PATENT APPLICATION

(11) **EP 1 686 550 A1**
(43) Date of publication of application: **02.08.2006**
(21) Application number: 06001964.3
(22) Date of filing: 31.01.2006
(51) Int. Cl.: G07F 17/32

(54) **Gaming management system, card unit and gaming management server**

(30) Priority: 31.01.2005 JP 2005023652
(71) Applicant: Aruze Corp., Tokyo 135-0063 (JP)
(72) Inventor: Okada, Kazuo, Tokyo (JP); Fujimoto, Jun, Tokyo (JP)
(74) Representative: HOFFMANN EITLE

(57) **Abstract**

A gaming management system has a gaming management server for storing a credit balance; and a card unit which reads a card ID from a permanent membership card or a provisional membership card where a card ID used for specifying a credit balance is stored. The gaming management server updates the credit balance to a credit balance determined by means of addition or subtraction. The card unit discharges the permanent membership card or the provisional membership card after having updated the credit balance thereof, and newly issues a provisional membership card. Further, either the card unit or the gaming management server stores player information in association with the permanent membership card.

## Description

### TECHNICAL FIELD

The present invention relates to a gaming management system that manages a valuable balance corresponding to the value or quantity of a game medium, such as money or coins, the valuable balance being required to start a game on a slot machine, a Pachinko gaming machine, a Pachi-Slot machine, or another gaming machine. The present invention also relates to a card unit and a gaming management server, both of which used in the gaming management system.

### BACKGROUND

Hitherto, there has been an apparatus which is called a sandwiched machine, because it is usually installed between gaming machines. The sandwiched machine enables a player to play a game provided by a gaming machine, by means of accepting a game card (a magnetic card, an IC card, or the like) into which is written a valuable balance corresponding to a predetermined amount of money, or issues a new game card. There also has been a system which manages the valuable balance by allowing the player to play a game on a gaming machine with the amount corresponding to the valuable balance stored in the game card.

There is disclosed in JP-A-2002-200323 a sandwiched machine that subtracts the amount of money to be used for a game from the valuable balance corresponding to the amount of inserted paper money, stores the result of subtraction into a game card, and issues that game card. When the valuable balance has become zero, the sandwiched machine collects the game card.

There is disclosed in JP-A-2002-074470 a system which stores identification information unique to a game card, collectively manages the valuable balance in association with an ID number by use of a central management apparatus, and collects the game card when the valuable balance has become zero.

However, according to the related-art techniques described in the documents JP-A-200323 and JP-A-2002-074470, the game card is collected after the valuable balance has become zero. In order to continue playing the game without using a game medium such as money or coins; i.e., in a cashless manner, after the balance has become zero, the player must endure the inconvenience of purchasing another game card or the like. For this reason, the related-art technique has failed to meet the players' demands for continuously playing the game. Moreover, when the valuable balance has become zero, the related-art game card comes off the player's hands and is merely collected. The game card is not arranged to cater to the game arcardes' needs for the ability to manage information about a player who plays the game through use of the game card in addition to managing the valuable balance.
**SUMMARY**
The present invention provides a gaming management system having a configuration that enables continuous cashless playing of a game and which is suitable for managing information about the player who plays the game along with the valuable balance, as well as providing a card unit and a gaming management server that is used for the gaming management system.
A gaming management system includes: a gaming management server; and a card unit that is connected to the gaming management server. The gaming management server includes: a storage means for storing a valuable balance for each of players, the valuable balance being required to start a game; and an updating means for updating the valuable balance for a player specified by an identification information output from the card unit, the identification information being configured to specify the valuable balance for each of the players. The card unit includes: a reading means for reading the identification information from a membership card inserted to the card unit, the membership card being configured to be either one of a permanent membership card permanently used by the player and a provisional membership card provisionally used by the player; a card discharge means for discharging the membership card inserted to the card unit after the valuable balance is updated by the updating means; and a card issuing means for newly issuing the provisional membership card. The gaming management system further includes at least one of: a first storage control means that is provided in the card unit and stores player information in the permanent membership card, the player information including at least one of information unique to a player, and information relevant to the game; and a second storage control means that is provided in the gaming management server and stores the player information in the storage means in association with the identification information.
A gaming management server is connected to a card unit that includes a reading means for reading identification information from a membership card inserted to the card unit, the identification information being configured to specify a valuable balance for each of the players, and the valuable balance being required to start a game. The gaming management server includes: a storage means for storing a valuable balance for each of players; and an updating means for updating the valuable balance for a player specified by an identification information output from the card unit.
A card unit is connected to a gaming management server that includes: a storage means for storing a valuable balance for each of players, the valuable balance being required to start a game; and an updating means for updating the valuable balance for a player specified by an identification information output from the card unit, the identification information being configured to specify the valuable balance for each of the players. The card unit includes: a reading means for reading the identification information from a membership card inserted to the card unit, the membership card being configured to be either one of a permanent membership card permanently used by the player and a provisional membership card provisionally used by the player; a card discharge means for discharging the membership card inserted to the card unit after the valuable balance is updated by the updating means; and a card issuing means for newly issuing the provisional membership card.
BRIEF DESCRIPTION OF THE DRAWINGS
In the accompanying drawings:
Fig. 1 is a block diagram of a game system having a gaming management system according to a first embodiment;
Fig. 2 is a perspective view of a card unit and a gaming machine according to the embodiment;
Fig. 3 is a block diagram showing the configuration of the card unit of the embodiment;
Fig. 4 is a schematic block diagram of the card unit of the embodiment, mainly showing a card storage-and-transfer section;
Figs. 5A and 5B are views showing an example membership card valuable information file and an example provisional membership card valuable information file;
Fig. 6 is a view showing an example of a player information file;
Fig. 7 is a flowchart showing operation procedures of main processing of a gaming management system of the embodiment;
Fig. 8 is a sequence chart showing an operation sequence of the gaming management system and an operation sequence of a corresponding gaming machine, which are performed during membership card processing;
Figs. 9A and 9B are flowcharts showing operation procedures of the card unit and those of the gaming management server, which are performed during membership card processing, wherein Fig. 9A shows operation procedures of the card unit, and Fig. 9B shows operation procedures of the gaming management server;
Fig. 10 is a sequence chart showing an operation sequence of the gaming management system and an operation sequence of the corresponding gaming machine, which are performed during provisional membership card processing;
Figs. 11A and 11B are flowcharts showing operation procedures of the card unit and those of the gaming management server employed during provisional membership card processing, wherein Fig. 11A shows operation procedures of the card unit, and Fig. 11B shows operation procedures of the gaming management server;
Fig. 12 is a sequence chart showing an operation sequence of the gaming management system and an operation sequence of the corresponding gaming machine, which are performed during cash processing; and
Fig. 13 is a schematic configuration diagram of a game system having a gaming management system of a second embodiment.

### DETAILED DESCRIPTION

Embodiments of a gaming machine according to the present invention will be described hereinbelow. Identical elements are assigned the same reference numerals, and their repeated explanations are omitted.

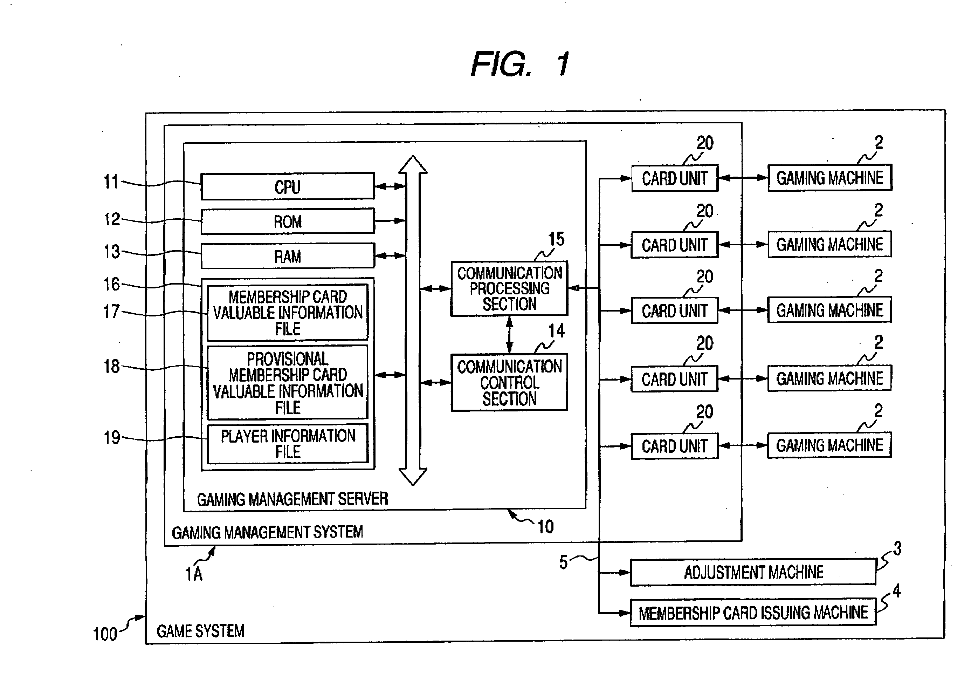

First Embodiment
Fig. 1 is a block diagram of a game system having a gaming management system 1A according to a first embodiment. A game system 100 is configured of the gaming management system 1A having a gaming management server 10 and a plurality of card units 20, 20, ...; a plurality of gaming machines 2, 2, ... connected to the respective card units 20, 20, ...; an adjustment machine 3; and a membership card issuing machine 4. The gaming management server 10, the plurality of card units 20, the adjustment machine 3, and the membership card issuing machine 4 are connected together by way of a private line 5, to thus constitute an in-store LAN (Local Area Network).

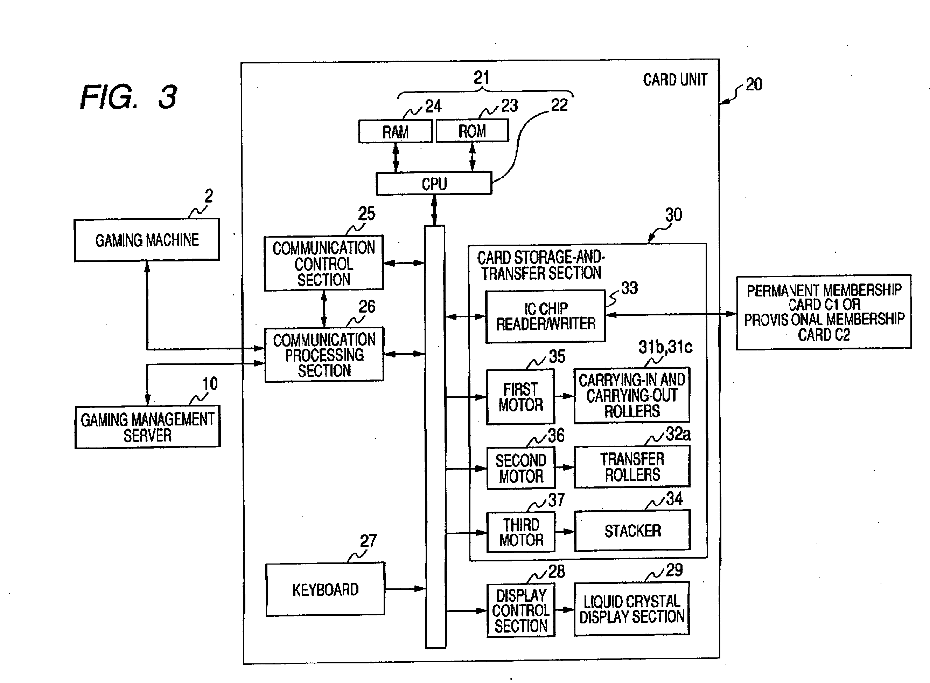

The gaming management system 1A includes the gaming management server 10 having a data storage section 16 for storing valuable information including the valuable balance required to start a game; and the card units 20, each of which has a chip reader/writer 33 (see Fig. 3) for reading a card ID from a game card which stores a card ID (to be described in detail later) used for specifying the valuable information (including the valuable balance). The term "valuable balance" means information corresponding to the value or quantity of paper money, coins, or other game mediums used for commencing a game. In the embodiment, the valuable balance corresponds to a credit balance. The valuable information includes information relevant to the valuable balance, in addition to the valuable balance. In the embodiment, the valuable information includes the card ID and the credit balance. As will be described later, the game card of the embodiment is classified into two types; namely, a membership card and a provisional membership card. Each of the cards stores identification information (a card ID) used for specifying the valuable information.

Gaming Management Server
The gaming management server 10 stores the valuable information associated with the card ID in the data storage section 16. The gaming management server 10 performs processing for updating the credit balance in the valuable information associated with the card ID transmitted (output) from the card unit 20 over the private line 5 to the valuable balance that is determined through addition or subtraction according to the result of the game. Further, the gaming management server 10 stores information about the player in the data storage section 16 in association with the card ID stored in the membership card, as well as storing the credit balance, to thus perform an update as required. This player information includes at least any one selected from the group comprising: information unique to the player (e.g., a personal identification number, an address, a phone number, a phone number of a cellular phone, an account number, and a credit card number); information about the games played by the player (e.g., game count information and game time information); and information about other games (e.g., the frequency of a visit to the game arcade, and the amount of money used in the game arcade).

As shown in Fig. 1, the gaming management server 10 includes a CPU (Central Processing Unit) 11, ROM (Read Only Memory) 12, RAM (Random Access Memory) 13, the data storage section 16, a communications control section 14, and a communications processing section 15.

The CPU 11 operates according to programs stored in the ROM 12; controls the operation of the entire gaming management server 10; and operates as updating means and storage control means in the embodiment.
The ROM 12 stores the programs to be executed by the CPU 11, and the RAM 13 stores the information required by the CPU 11 to execute the programs.

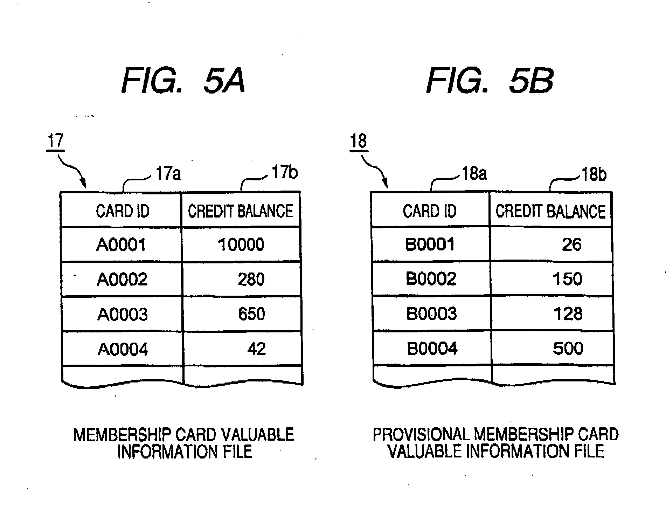

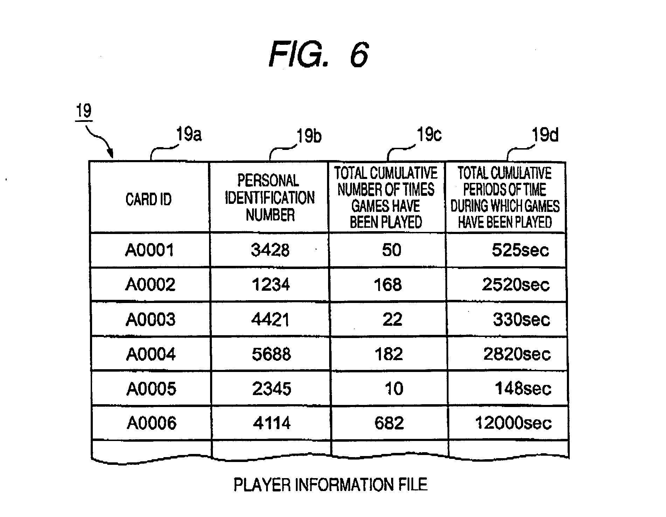

The data storage section 16 is an auxiliary storage device, such as an HDD (Hard Disk Drive) or the like, and functions as the storage means in the embodiment and stores the valuable information (a card ID and a credit balance) . The data storage section 16 stores a membership card valuable information file 17, a provisional membership card valuable information file 18, and a player information file 19, such as those shown in Figs. 5 and 6.

The membership card valuable information file 17 shown in Fig. 5A has a record consisting of a field 17a for a "Card ID" and a field 17b for a "Credit Balance." The card ID is set in a search key to thus make reference to the membership card valuable information file 17, so that a corresponding credit balance can be searched. The card ID of the membership card of the embodiment is formed from the alphanumeric "A" and four digits, as will be described later. Similarly, as shown in Fig. 5B, the provisional membership card valuable information file 18 also has a record consisting of a field 18a for "Card ID" and a field 18b for "Credit Balance," and enables search of a corresponding credit balance on the basis of the card ID. The card ID of the provisional membership card of the embodiment is formed from the alphanumeric "B" and four digits, as will be described later.

The player information file 19 shown in Fig. 6 is for managing the player information about the player possessing the membership card, and has a record consisting of a field 19a for a "Card ID," a field 19b for a "Personal Identification Number," a field 19c for a "Total Cumulative Number of Times Games have been played," and a field 19d for a "Total Cumulative Period of Time During Which Games have been played." The card ID is set to a search key, and reference is made to the player information file 19, so that a corresponding personal identification number, the total cumulative number of times games have been played, and the total cumulative periods of time during which games have been played can be searched. For instance, when Card ID "A0002" is set to the search key and a search is conducted, a personal identification number of "1234," a total cumulative number of times games have been played "168," and a total cumulative period of time during which games have been played "2520 sec." are acquired.

The communications control section 14 (see Fig. 1) operates upon receipt of a command from the CPU 11, and controls connection/disconnection of a line used for establishing communication with the card units 20, the adjustment machine 3, and the membership card issuing machine 4. The communications processing section 15 operates under control of the communications control section 14, and performs transmission/receipt of information by means of wireless or wired communication.

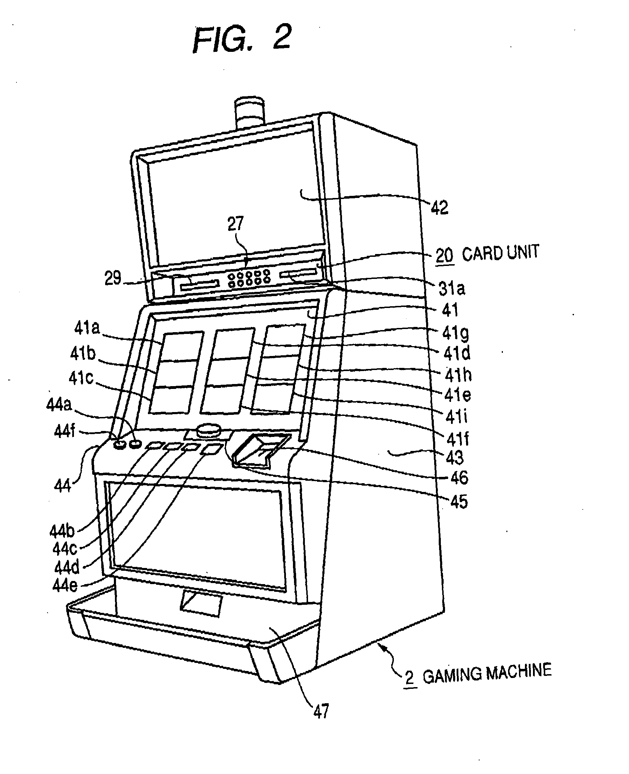

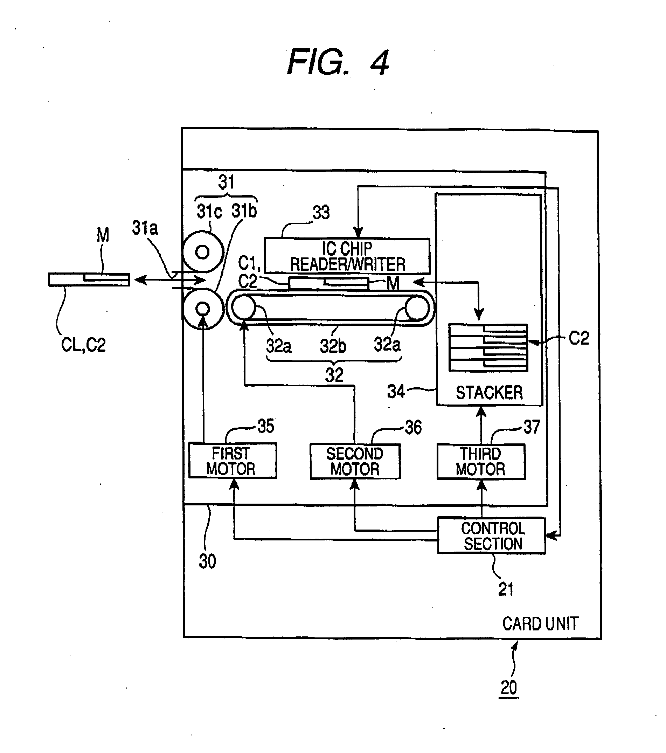

Card Unit
Fig. 2 is a perspective view showing the external configuration of the card unit 20 and the gaming machine 2. Fig. 3 is a block diagram showing the configuration of the card unit 20. Fig. 4 is a schematic block diagram of the card unit, mainly showing a card storage-and-transfer section. As shown in Fig. 2, the card unit 20 of the embodiment is mounted between a main display 41 and a sub-display 42, both of which belong to the gaming machine 2 and will be described later. In the game system 100, the card unit 20 is in a one-to-one correspondence with the gaming machine 2.

As shown in Fig. 3, the card unit 20 includes a control section 21 for controlling operation of the card unit 20; a communication control section 25 for transmitting and receiving information between the gaming management server 10 and the gaming machine 2; and a communication processing section 26. The card unit 20 has a keyboard 27, a display control section 28, a liquid-crystal display section 29, and a card storage-and-transfer section 30.

The control section 21 has the CPU 22, ROM 23, and RAM 24. The CPU 22 operates in accordance with the programs stored in the ROM 23 and controls the operation of the entire card unit 20. The ROM 23 stores the programs to be executed by the CPU 22, and the RAM 24 stores information required by the CPU 22 to execute the programs.

The communication control section 25 operates upon receipt of a command from the CPU 22, and controls connection and disconnection of a line used for establishing communication with the gaming management server 10 and the gaming machine 2. The communication processing section 26 operates under control of the communication control section 25, and performs transmission and receipt (output and input) of information.

As shown in Fig. 2, the keyboard 27 has a total of ten buttons arranged in two lines, or an upper line and a lower line. The buttons are assigned to numeric of 0 to 9. By means of the numbered buttons being operated (pushed or contacted), corresponding numerical information is input to the CPU 22. The keyboard 27 is used by the player to input a personal identification number.

Upon receipt of a command from the CPU 22, the display control section 28 displays an image, such as a character or a numeric, on the liquid-crystal display section 29. Although the liquid-crystal display section 29 displays the image representing a character or a numeric, it principally displays a credit balance corresponding to the result of the game in the embodiment.

As shown in Figs. 3 and 4, the card storage-and-transfer section 30 includes a card insertion section 31, a card transfer section 32, the IC chip reader/writer 33, a stacker 34, a first motor 35, a second motor 36, and a third motor 37. The card storage-and-transfer section 30 operates as a card discharging unit and a card issuing means.

The card insertion section 31 is disposed inside a front panel of the card unit 20 (in the inside of the card unit 20) in which is formed a slot 31a enabling insertion of two types of game cards (a permanent membership card C1 and a provisional membership card C2). The card insertion section 31 is constituted of a pair of upper and lower carrying-in and carrying-out rollers 31b, 31c which transport, in a sandwiching manner, the game cards C1, C2 inserted from the insertion slot 31a; and a sensor (not shown), or the like, for detecting the game card C1 or C2 inserted by the player.

The card transfer section 32 has a plurality of transfer rollers 32a, and a transfer belt 32b which is passed around the transfer rollers 32a and transfers, by means of an upper surface thereof, the game cards C1 and C2. The card transfer section 32 is set so as to connect the card insertion section 31 to the stacker 34 by way of the IC chip reader/writer 33.

The IC chip reader/writer 33 has an antenna section, a transmitting/receiving section, and the like, and is placed in a reading position with the antenna section oriented toward the transfer belt 32b. The IC chip reader/writer 33 corresponds to a reading means of the present invention. The IC chip reader/writer 33 is configured so as to read a card ID from an IC chip M (storage means) embedded in the game card C1 or C2 situated in the reading position; to input the thus-read card ID to the CPU 22 of the control section 21; and to write predetermined information into the IC chip M pursuant to a command from the CPU 22.

The stacker 34 is disposed in a deep position away from the card transfer section 32, and has a storage section capable of storing a plurality of provisional membership cards C2 in a stacked manner, and a dispatch section for dispatching the stored provisional membership cards C2 to the transfer belt 32b one at a time. The provisional membership card, which has been inserted by way of the insertion slot 31a and transferred by the transfer belt 32b, is accepted, stored, and fed one at a time.

The first motor 35, the second motor 36, and the third motor 37 are connected to the CPU 22 of the control section 21. Upon receipt of a command from the CPU 22, the first motor 35 performs activation and deactivation of the carrying-in and carrying out rollers 31b, 31c. Similarly, the second motor 36 performs activation and deactivation of the transfer rollers 32a, and the third motor 37 performs activation and deactivation of the dispatch section of the stacker 34.

Game Cards
Two types of the game cards are used in the game system 100. One type of the game card is a membership card (a permanent membership card) which is permanently used for a game in the game system 100, and the other type of the game card is a provisional membership card (a provisional membership card) which is provisionally used for a game in the game system 100. Each of the permanent membership card C1 and the provisional membership card C2 has an embedded IC chip M whichis an information storage means. A card ID (unique identification information) used for specifying valuable information is stored in the IC chip M. The card ID of the permanent membership card C1 consists of the alphanumeric A and four digits, and the card ID of the provisional membership card C2 consists of the alphanumeric B and four digits. By means of the card ID, the gaming management server 10 and the card units 20 can identify the type of the card (whether or not the card is a membership card) and discriminate the individual game cards C1 and C2. The permanent membership card C1 and the provisional membership card C2 differ from each other in terms of an appearance (a design, such as a pattern, a character, or the like, printed on the card). Thus, the player can identify whether or not the card is a membership card by appearance. In the embodiment, only the card ID is stored in the game cards C1 and C2. However, valuable information may be stored in the game cards C1 and C2, or player information may be stored in the same.

Gaming Machine
As shown in Fig. 2, the gaming machine 2 of the embodiment is a slot machine. This slot machine has the main display 41 which displays images of a plurality of symbols to be variably displayed, and enables the player to play a variable display game (also called a "slot game") where a win is determined according to images of stopped-displayed symbols among the images of the plurality of symbols to be variably displayed. In order to start the variable display game on the gaming machine 2, the player is required to insert money or coins or to use a credit balance specified by use of the game card C1 or C2. The configuration of the gaming machine 2 will be described hereunder.

As shown in Fig. 2, the gaming machine 2 has, in the front side of a cabinet 43, the main display 41 having a liquid crystal display device. Further, the sub-display 42 similarly having a liquid crystal display device is provided in a position above the main display 41.

The main display 41 is an image display unit, and has a total of nine variable display sections 41a, 41b, 41c, 41d, 41e, 41f, 41g, 41h, and 41i, which are arranged in three rows and three columns. The main display 41 is arranged such that scroll display images (reel images which are displayed as if mechanical reels spin), which look as if a plurality of symbols move from up to down, are displayed in the respective variable display sections 41a to 41i.
The sub-display 42 displays an image which is not involved directly in the game (e.g., an explanation of specifics of the game) .

Provided below the main display 41 are a control panel 44, a coin insertion slot 45 by way of which coins to be betted on the game are inserted, and a paper money insertion slot 46 used for inserting paper money. A coin receiving tray 47 for receiving paid coins is provided in a lower portion of the cabinet 43. The control panel 44 has a payout button 44a for instructing payout of coins; a MAX-BET (MAXBET) button 44b used for making the setting so as to bet the maximum number of coins; a 1BET button 44c used for making the setting so as to bet one coin; a repeat BET (REPEATBET) button 44d which is used for betting the same number of coins betted in an immediately-preceding game and instructs commencement of a game; a start (START) button 44e by way of which an instruction for starting a game is input; and an end-of-game button 44f for instructing payout of the card.

The coin insert slot 45 is provided for the player to insert coins to be betted on a game, and has an inserted coin sensor (not shown) which outputs a signal indicating insertion of coins. The paper money insertion slot 7 is provided for the player to insert paper money, and has an inserted paper money sensor (not shown) which outputs a signal indicating insertion of paper money.

The gaming machine 2 has a plurality of constituent elements, notably, the microcomputer.
The microcomputer has a main CPU, RAM, and ROM (none of these elements are shown). The main CPU operates pursuant to the programs stored in the ROM. The main CPU receives inputs of signals from individual sections of the control panel 44, and also receives inputs of signals from other constituent elements and outputs signals to the same, thereby controlling the operation of the overall gaming machine 2. The RAM stores data and programs, which are used at the time of operation of the main CPU. The ROM 34 stores the programs to be executed by the main CPU 32 and permanent data.

The gaming machine 2 further has a random number generator, a sampling circuit, a clock pulse generation circuit, a frequency divider, and a data storage section (none of these elements are shown). The random number generator operates pursuant to a command from the main CPU, and generates random numbers in a given range. The sampling circuit samples an arbitrary random number from random numbers generated by the random number generator in accordance with a command from the main CPU, and inputs the thus-sampled random number to the main CPU. The clock pulse generation circuit generates a reference clock signal used for activating the main CPU, and the frequency divider inputs to the main CPU a signal which is generated by dividing the reference clock signal at a given cycle.

The gaming machine 2 has an image control circuit. The image control circuit controls an image display on the main display 41, thereby causing the main display 41 to display various types of images, such as variable display images of a plurality of symbols, or the like.
Moreover, the gaming machine 2 has a timer for counting a start time and an end time of the game, and a counter for counting the number of games.

Adjustment Machine
The adjustment machine 3 includes the card insertion section into which the game cards C1 and C2 are inserted; a coin storage section for storing coins; a reading section for reading the card ID of each of the game cards C1 and C2; an adjustment button for accepting adjustment processing requested by the player; a money adjustment section for paying out predetermined paper money or coins from the coin storage section; a control unit for controlling the operation of the overall adjustment machine 3, and the like (none of these elements are shown) . The adjustment machine 3 reads a card ID from the game card C1 or C2 inserted by the player; transmits the thus-read card ID to the gaming management server 10; and pays out a game medium, such as money or coins, on the basis of a credit balance upon receipt of the credit balance corresponding to the card ID from the gaming management server.

Membership Card Issuing Machine
The membership card issuing machine 4 has a membership card storage section; a personal identification number input section; a money insertion section a membership card issuing section; a communication processing section for transmitting and receiving information to and from the gaming management server; a control unit for controlling operation of the entire membership card issuing machine 4; and the like (none of these elements are shown) . The membership card issuing machine 4 also transmits in an associated manner, to the gaming management server 10, a credit balance corresponding to the money inserted by the player, the personal identification number input by the player, and the card ID stored in the membership card issued for the player. The gaming management server 10 that has received the information transmitted from the membership card issuing machine 4 generates a new record in each of the membership card valuable information file 17 and the player information file 19, on the basis of the received information.

Detailed operation of the Gaming Management System
The gaming management system 1A stores the valuable information including the credit balance required to start a game on the gaming machine 2, and outputs to the gaming machine 2 a credit balance equivalent to the valuable information corresponding to the game card C1 or C2 inserted by the player. At the end of the game, the gaming management system 1A updates the stored credit balance to a new credit balance which is determined through addition or subtraction. As mentioned above, the credit balance can also be updated to a new credit balance which has been determined not only through subtraction but also through addition. Accordingly, the gaming management system 1A can cause the player to increase the credit balance before the credit balance becomes zero, which would make the player unable to play the game, thereby enabling continuous playing of a game without use of the game medium, such as money or coins; i.e., in a cashless manner.

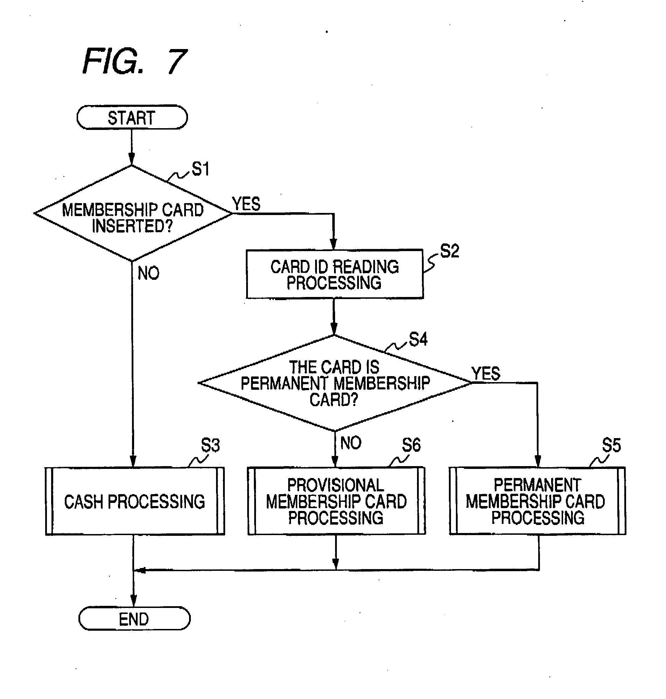

The gaming management system 1A is arranged to be able to manage the credit balance corresponding to the provisional membership card C2 and the credit balance corresponding to the permanent membership card C1. When the credit balance of the provisional membership card C2 has become zero, the card is stored in the stacker 34; namely, the card is collected. In contrast, when the credit balance of the permanent membership card C1 has become zero, the permanent membership card C1 is discharged after the credit balance of the card has been updated, whereby the permanent membership card C1 can be used repeatedly without being collected. For this reason, the permanent membership card C1 provides the player with improved convenience. Moreover, in addition to storing the valuable information, such as a credit balance and the like, the permanent membership card C1 also stores player information, thereby enabling management of various types of information about the player in conjunction with the credit balance.
Operation procedures of the gaming management system 1A. will now be described by reference to flowcharts and sequence charts shown in Figs. 7 through 12. In Figs. 7 through 12, steps are abbreviated as S.

Fig. 7 is a flowchart showing operation procedures of main processing of the gaming management system 1A on a per-block basis.
The card unit 20 of the gaming management system 1A causes processing to branch depending on whether or not the game card C1 or C2 is inserted. When the game card is inserted, processing proceeds to step S2. When the game card is not inserted, processing proceeds to step S3, where cash processing to be described later is performed. When processing proceeds to step S2, the card unit 20 determines the type of the inserted game card to be C1 or C2. When the card is the permanent membership card C1 (the alphanumeric of the card ID is A), processing proceeds to step S5, where membership card processing to be described later is performed. When the card is the provisional membership card C2 (the alphanumeric of the card ID is B), processing proceeds to step S6, where provisional membership card processing is performed.

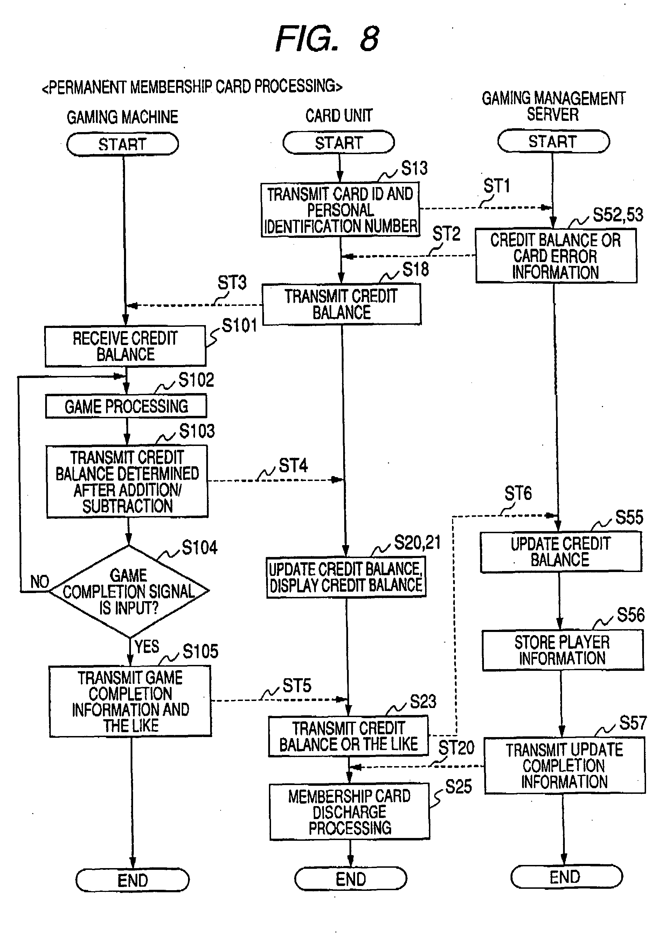

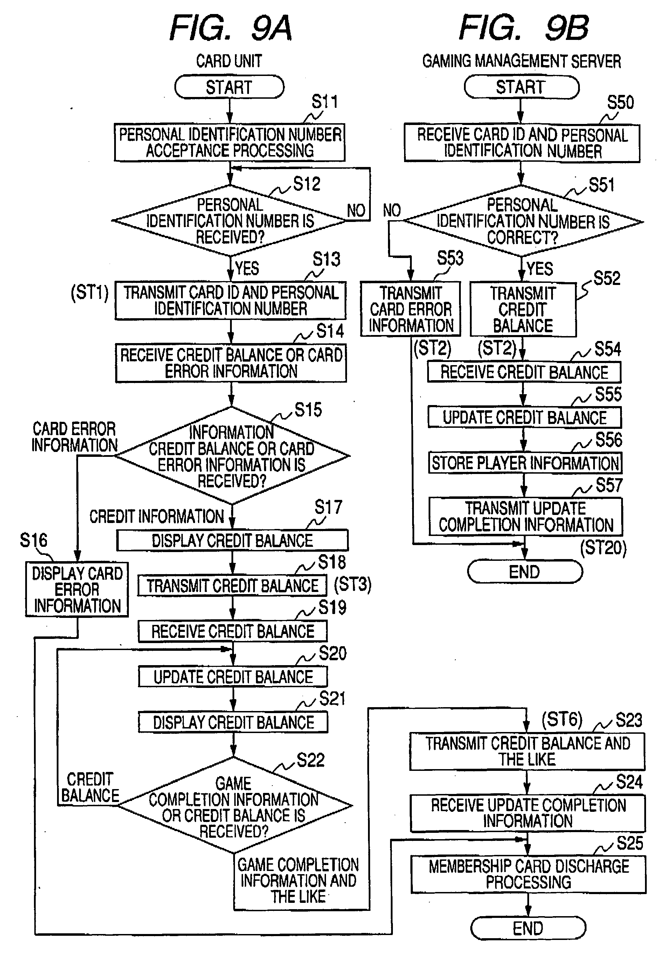

Membership Card Processing
During membership card processing, the permanent membership card C1 is discharged to return to the player after the credit balance has been updated.
First, operation procedures of membership card processing will be described by reference to Figs. 8, 9A and 9B. Fig. 8 is a sequence chart showing an operation sequence of the gaming management system 1A (the card unit 20 and the gaming management server 10) and an operation sequence of a corresponding gaming machine 2, which are performed during membership card processing. Fig. 9 is a flowchart showing operation procedures of the card unit 20 and those of the gaming management server 10, which are performed during membership card processing. Fig. 9A shows operation procedures of the card unit 20, and Fig. 9B shows operation procedures of the gaming management server 10. Fig. 8 shows the transmission direction of information by means of reference symbol ST. A block, which performs transmission processing in the flowchart shown in Figs. 9A and 9B, is assigned a parenthesized transmission number indicated by ST in Fig. 8. Steps (S) shown in Fig. 8 correspond to steps (S) in Figs. 9A and 9B.

First, an overview of operation processing is described with an emphasis on transmission and receipt of information between the gaming management system 1A that performs membership card processing and the gaming machine 2 which performs operation processing in association with the membership card processing.
When the permanent membership card C1 is inserted and the card ID assigned to the permanent membership card C1 are read, the card unit 20 transmits the read card ID and the input personal identification number to the gaming management server 10 (ST1) . Upon receipt of the card ID and the personal identification number, the gaming management server 10 determines whether or not the personal identification number is authenticated. If the personal identification number is authenticated, the credit balance corresponding to the card ID is transmitted to the card unit 20. If the personal identification number is not authenticated, the card error information is transmitted to the card unit 20 (ST2) . Upon receipt of the credit balance, the card unit 20 transmits the credit balance to the gaming machine 2 (ST3) .

Upon receipt of the credit balance, the gaming machine 2 performs gaming operation which performs a variable display game to be started by use of the credit balance. When one variable display game has been completed, the credit balance is subjected to addition or subtraction, and a resultant credit balance is transmitted to the card unit 20 (ST4). Upon receipt of the credit balance determined after addition or subtraction, the card unit 20 causes the liquid-crystal display section 29 to display the received credit balance. Meanwhile, the gaming machine 2 repeatedly performs game processing and transmission of the credit balance, which has undergone addition or subtraction, until a game end signal is input. The card unit 20 displays the credit balance, which has undergone addition or subtraction, every time it receives the credit balance.

Upon receipt of an input of a game end signal, the gaming machine 2 transmits game completion information (including game history information such as information about the number of times games have been played, information about a time during which the game has been played, etc.), or the like, to the card unit 20 (ST5). Upon receipt of the game completion information, and the like, the card unit 20 transmits to the game managing server 10 the credit balance, which has been updated to a value obtained by addition or subtraction, and the player information (ST6). Upon receipt of the credit balance, or the like, the gaming management server 10 performs player information storage processing and credit balance update processing for updating the credit balance to a credit balance obtained by addition or subtraction, and transmits the update end information to the card unit 20 (ST20). Upon receipt of the update end information, the card unit 20 performs membership card discharge processing, to thus terminate the operation processing.
Operation procedures of the card unit 20, those of the gaming management server 10, and those of the gaming machine 2 will be described in detail hereinbelow.

As shown in Fig. 9, when membership card processing has been started, processing proceeds to step S11, and the card unit 20 performs personal identification number receipt processing during which the CPU 22 commands the display control section 28 to cause the liquid-crystal display section 29 to display an image which prompts the player to input a personal identification number. In subsequent step S12, the card unit 20 awaits input of a personal identification number.

When a personal identification number of four digits is input to the CPU 22 from the keyboard 27 by means of the player's operation, processing proceeds to subsequent step S13, where there is performed processing for transmitting the card ID and the personal identification number to the gaming server 10. Here, the CPU 22 causes the communication processing section 26 to transmit the card ID and the personal identification number, both of which are stored in the RAM 24, to the gaming management server 10. As shown in Fig. 8, transmission ST1 of a card ID and a personal identification number is performed.

When processing proceeds to subsequent step S14, the information received by the communication processing section 15 through transmission ST2 is input to the CPU 22, and processing proceeds to step S15. When processing proceeds to step S15, the CPU 22 determines the type of the input information (whether the input information is card error information or a credit balance) .
When the input information has been determined to be card error information, processing proceeds to step S16. When the input information is determined to be a credit balance, processing proceeds to step S17. When processing proceeds to step S16, the CPU 22 causes the liquid-crystal display section 29 to display a message indicating that the personal identification number is incorrect. When processing proceeds to subsequent step S25, membership card discharge processing, which will be described later, is performed. In contrast, when processing proceeds to step S17, the credit balance and the card ID received by the CPU 22 are stored in the RAM 24 in an associated manner, and the liquid-crystal display section 29 is caused to display the credit balance. When processing proceeds to subsequent step S18, the communication processing section 15 is caused to transmit the credit balance. As a result, as shown in Fig. 8, transmission ST3 of a credit balance is performed.

When processing proceeds to subsequent step S19, the communication processing section 26 receives the credit balance transmitted through transmission ST4, and the thus-received credit balance is input to the CPU 22. Processing then proceeds to step S20. When processing has proceeded to step S20, the CPU 22, updates the credit balance stored in the RAM 24 to the credit balance received from the gaming machine 20, and processing further proceeds to step S21. The liquid-crystal display section 29 is caused to display the thus-updated credit balance, to thus inform the player of the updated credit balance.

When processing proceeds to subsequent step S22, the communication processing section 26 receives information from the gaming machine 2, and inputs the thus-received information to the CPU 22. The CPU then determines the type of input information (whether the input information is game completion information, and the like, or the credit balance). When the input information is determined to be game completion information, and the like, processing proceeds to step S23. In contrast, when the input information is determined to be a credit balance, processing returns to step S20, where the credit balance is updated. When processing proceeds to subsequent step S23, the CPU 22 causes the communication processing section 26 to transmit the card ID, the updated credit balance, and the player information to the gaming management server 10. As a result, as shown in Fig. 8, transmission ST6 of a credit balance or the like is performed.

Subsequently, processing proceeds to step S24. When update completion information transmitted through transmission ST20 is received, processing proceeds to step S25. The CPU 22 and the card storage-and-transfer section 30 operate as card discharge means for discharging the permanent membership card C1, thereby performing membership card discharge processing. When the membership card discharge processing is started, the CPU 22 commands the second motor 36 (see Fig. 4) to drive the transfer rollers 32a to thus transfer the membership card IC located in a reading position to an insertion-and-discharge position. Further, the CPU 22 commands the first motor 35 to drive the carrying-in and carrying-out rollers 31b, 31c, thereby exposing the permanent membership card C1 outside by way of the insertion slot 31a (see Fig. 4) and returning the card to the player. Thus, operation processing of the card unit 20 is completed. As mentioned above, during the membership card discharge processing, after the gaming management server 10 has updated the credit balance, the permanent membership card C1 is discharged, whereupon operation processing is completed.

Operation procedures of the gaming management server 10 will be subsequently described.
When the membership card processing is commenced, the gaming management server 10 causes processing to proceed to step S50, where the communication processing section 15 operates to thus receive the card ID and the personal identification number. The card ID and the personal identification number, which have been received, are input to the CPU 11, and processing proceeds to step S51.

When processing proceeds to step S51, a determination is made as to whether or not the input personal identification number is authenticated. The CPU 11 sets the input card ID to a search key, and acquires a corresponding personal identification number by reference to the player information file 19 stored in the data storage section 16, thereby making an authentication determination as to whether or not the input personal identification number coincides with the acquired personal identification number. When a coincidence exists, processing proceeds to step S52. When a coincidence does not exist, processing proceeds to step S53. When processing proceeds to step S52, the CPU 11 sets an input card ID to the search key; acquires a corresponding credit balance by reference to the membership card valuable information file 17 stored in the data storage section 16; and causes the communication processing section 15 to transmit the thus-acquired credit balance and corresponding card ID. When processing proceeds to step S53, the CPU 11 causes the communication processing section 15 to transmit the card error information used for discharging the permanent membership card C1. Thereby, as shown in Fig. 8, transmission ST2 of a credit balance and card error information is performed.

Processing proceeds to subsequent step S54, where the credit balance and the like, which have been transmitted through transmission ST6, are received, and processing proceeds to step S55, where the credit balance is updated. When updating of the credit balance is started, the CPU 11 acts as updating means of the present invention; sets the stored card ID to a search key; and performs update processing for updating a corresponding record by reference to the membership card valuable information file 17 stored in the data storage section 16. By means of this update processing, the credit balance in the valuable information corresponding to the card ID transmitted (output) from the card unit 20 is updated to the credit balance having undergone addition or subtraction.

When processing proceeds to subsequent step S56, player information storage processing is performed. When the player information storage processing is commenced, the CPU 11 serves as the storage control means, and causes the data storage section 16 to store the received player information (including the player history information). Here, the CPU 11 sets the received card ID to the search key, and acquires the total cumulative number of times games have been played and the total cumulative periods of time during which games have been played, by reference to the player information file 19. The CPU 11 further adds the player history information (the information about the number of times the game has been played, information about the time during which the game has been played) received in step S54 to the thus-acquired number of times the games have been played and the periods of time during which the games have been played, thereby determining a new total cumulative number of times the games have been played and a new total periods of time during which the games have been played. The CPU 11 rewrites the player history information such that the record of the player information file 19 corresponding to the received card ID assumes the new total cumulative number of times the games have been played and the new total periods of time the games have been played. As a result, the player information is stored in the data storage section 16 in association with the card ID stored in the permanent membership card C1.

When processing proceeds to subsequent step S57, the CPU 11 causes the communication processing section 15 to transmit the update completion information to the card unit 20, thereby completing the operation processing. As shown in Fig. 8, transmission ST20 of update completion information is performed.

Subsequently, operation procedures of the gaming machine 2 to be performed in response to the membership card processing will be described by reference to Fig. 8.
When the gaming management system starts the membership card processing, the gaming machine 2 causes processing to proceed to step S101, where the credit balance transmitted through transmission ST3 is received. When processing proceeds to subsequent step S102, the main CPU operates as game progress control unit, to thus perform game processing. When processing proceeds to step S102 and game processing is commenced, the gaming machine 2 receives operation for starting a game performed by the player. The player actuates any one of the MAX-BET button 44b, the 1BET button 44c, and the repeat BET button 44d (see Fig. 2) , and the number of credits to be bet on one game is determined within the range of the credit balance. Information about the determined number of credits is input to the main CPU. The time when the number of credits is determined is counted by the unillustrated timer, and the time counted by the timer is stored in the RAM as the game start time.

The main CPU performs processing for subtracting the determined number of credits from the credit balance, and stores the credit balance determined after subtraction into the RAM of the gaming machine 2 . When the player operates the start button 44e (including the repeat BET button 44d when a game to be successively played is the second game or a subsequent game), the variable display game is started. Occurrence of a failure of winning and a winning state are determined according to a combination of stationarily-displayed symbol images, and coins or the like are paid out according to the winning state. The main CPU makes an addition to the credit balance according to the number or amount of paid coins or the like. The credit balance determined after addition is stored in the RAM of the gaming machine 2. When game processing for one play has been completed through the above-described processes, the counter of the gaming machine 2 counts the number of times the games have been played, and processing proceeds to step S103. The CPU transmits to the card unit 20 the credit balance determined after addition or subtraction. Thus, there is performed transmission ST4 of the credit balance corresponding to the card unit 20 to the gaming machine 2.

When processing proceeds to subsequent step S104, the main CPU determines whether or not the game end signal is input. When the player has pressed the game end button 44f and the game end signal is input, processing proceeds to step S105. In contrast, when the player has pressed any one of the MAX-BET button 44b, the 1BET button 44c, and the repeat BET button 44d to thus input information about the number of credits, processing returns to step S102, where game processing is performed. When processing proceeds to step S105, a game end time is counted by the unillustrated timer, and the main CPU determines a game time from the game end time and the game start time. Moreover, the number of times games have been played is also determined by an unillustrated counter. Information about the thus-determined game history, such as the game time and the number of times the games have been played; for example, information about the number of the games have been played (game count information) and information about a period of time during which the games have been played (game time information), correspond to the game history information. The main CPU transmits the game history information and the game completion information (game completion information or the like) to the card unit 20. As shown in Fig. 8, transmission ST5 of the game completion information or the like is thus performed.

During the above-described membership card processing, there is also performed processing for storing the valuable information (including a credit balance) assigned to the permanent membership card C1 in the data storage section 16 and for updating the credit balance to the credit balance determined as a result of subtraction of the number of credits used for the games from the credit balance in the valuable information as well as to the credit balance determined as a result of addition of the number of credits used for the games to the credit balance in the valuable information. The permanent membership card C1 can also be arranged so that an addition can be made to the credit balance as a result of the player adding money to the credit balance. Accordingly, even when the credit balance has temporarily become zero as a result of the game, the player can play the game which involves repeated use of the permanent membership card C1. Since the permanent membership card C1 can be continuously used so as to prevent the credit balance from becoming zero, the player can repeatedly play the game without use of a game medium, such as money, coins, and the like.

The permanent membership card C1 is a game card which is permanently used by a player, and is allocated to a specific player. In this system, information unique to the player (e.g., an address, a phone number, or the like), information about the game played by the player, and other player information are stored in association with the card ID stored in the permanent membership card C1, so that various items of player information about the specific player can be acquired and managed. An administrator who operates this system in the game arcade can manage a game result, such as the game history of an individual player or outcomes of the game played by that player, in connection with the permanent membership card C1 through use of the player information. Extraction of service problems or examination of remedial measures against the problems can be performed by use of the game result.

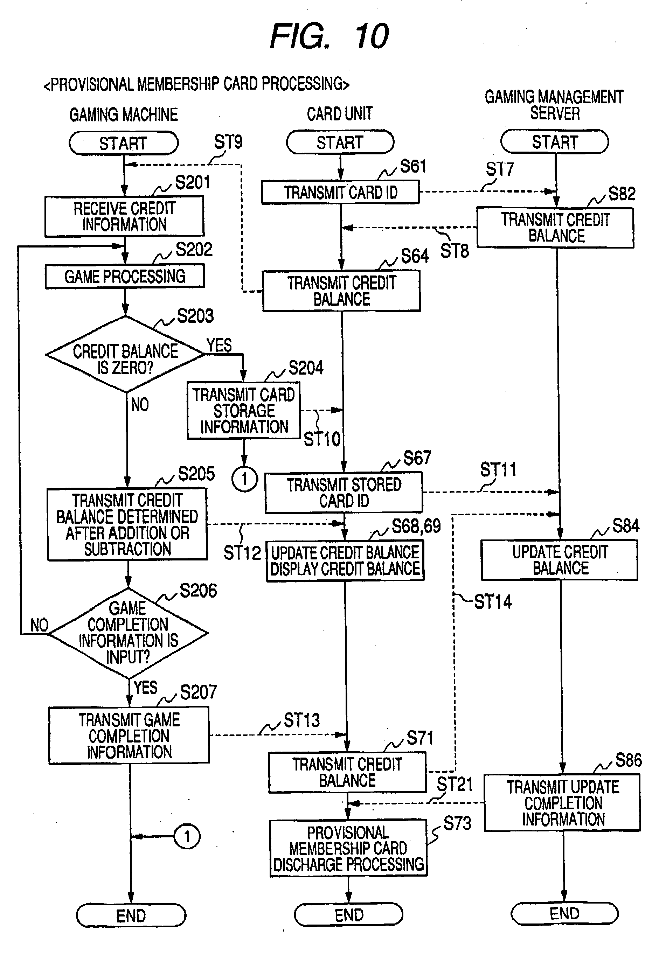

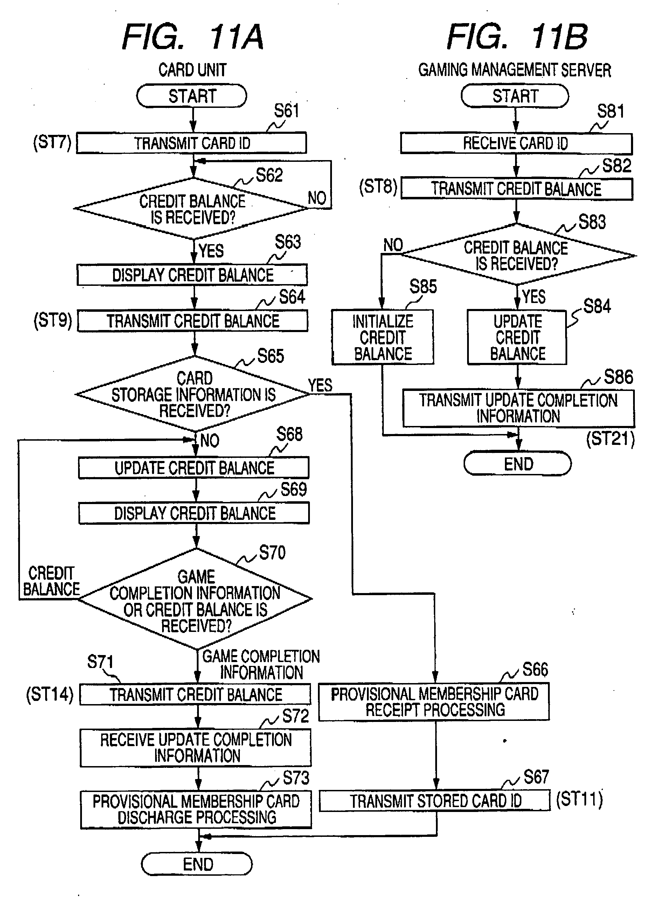

Provisional Membership Card Processing
During provisional membership card processing, a provisional membership card C2 is discharged to return to the player after the credit balance has been updated. Meanwhile, when the credit balance assigned to the card ID has become zero, the provisional membership card is collected.
Operation procedures of provisional membership card processing will be described by reference to Figs. 10 and 11B. Fig. 10 is a sequence chart showing the gaming management system 1A (the card unit 20 and the gaming management server 10) for use in the provisional membership card processing and an operation sequence of the corresponding gaming machine 2. Fig. 11 is a flowchart showing operation procedures of the card unit 20 and those of the gaming management server 10 employed during provisional membership card processing. Fig. 11A shows operation procedures of the card unit, and Fig. 11B shows operation procedures of the gaming management server. In Fig. 10, reference symbol ST designates a transmission direction of information. A block, which performs transmission processing in the flowchart shown in Figs. 11A and 11B, is written by parenthesizing the transmission number designated by ST in Fig. 10. Steps (S) in Fig. 8 correspond to steps (S) in Figs. 9A and 9B. Moreover, processing operations analogous to the membership card processing are performed in the steps that have already been described, and their detailed descriptions are omitted.

First, an overview of operation procedures will be described with emphasis on transmission and receipt of information between the gaming management system 1A, which performs provisional membership card processing, and the gaming machine 2, which performs operation processing in association with provisional membership card processing.

When the card C2 has been inserted and the card ID assigned to the provisional membership card C2 is read, the card unit 20 transmits the read card ID to the gaming management server 10 (ST7) . Upon receipt of the card ID, the gaming management server 10 transmits the credit balance assigned to the card ID to the card unit 20 (ST8) . Upon receipt of the credit balance, the card unit 20 transmits the credit balance to the gaming machine 2 (ST9) .

Upon receipt of the credit balance, the gaming machine 2 performs gaming operation. When one variable display game has been completed, a determination is made as to whether or not the credit balance is 0. When the credit balance is determined to be 0, the card storage information is transmitted to the card unit 20 (ST10). When the card unit 20 has received the card storage information, the card storage-and-transfer section 30 operates as card collection means, and receives and collects the provisional membership card C2. Moreover, the card unit 20 transmits to the gaming management server 10 the card ID (a stored card ID) assigned to the provisional membership card C2 (ST11) . Upon receipt of the stored card ID, the gaming management server 10 initializes the valuable information (a credit balance and the like) stored in association with the stored card ID.

In contrast, when having determined that the credit balance is not zero after completion of the game, the gaming machine 2 transmits the credit balance, which has undergone addition or subtraction, to the card unit 20 (ST12). Upon receipt of the credit balance that has undergone addition or subtraction, the card unit 20 displays the received credit balance. The gaming machine 2 and the card unit 20 repeatedly perform a series of operation processing from game processing to display of the credit balance that has undergone addition or subtraction, until the gaming machine 2 receives a game end signal. When having received an input of the game end signal, the gaming machine 2 transmits the game completion information to the card unit 20 (ST13). Upon receipt of the game completion information, the card unit 20 transmits to the gaming management server 10 the credit balance, which has already been updated to the value determined by addition or subtraction, (ST14) . Upon receipt of the credit balance, the gaming management server 10 performs update processing for updating the credit balance to the credit balance that has undergone addition or subtraction, and transmits update completion information to the card unit 20 (ST21). Upon receipt of the update completion information, the card unit 2 terminates operation processing by performing provisional membership card discharge processing.
Operation procedures of the card unit 20, those of the gaming management server 10, and those of the gaming machine 2 will be described in detail hereunder.

As shown in Fig. 11, when provisional membership card processing is commenced, the card unit 20 proceeds to step S61, where the CPU 22 transmits the card ID stored in the RAM 24 to the gaming management server 10 from the communication processing section 26. As a result, transmission ST7 of the card ID is performed as shown in Fig. 10.

When processing proceeds to subsequent step S62, the card unit 20 waits until the credit balance is received from the gaming management server 10. When the credit balance is received, processing proceeds to step S63, where the liquid crystal display section 27 is caused to display the credit balance through processing (see Fig. 9) analogous to that described in connection with step S17. When processing has proceeded to subsequent step S64, the credit balance is transmitted to the gaming machine 2 by means of processing (see Fig. 9) analogous to that described in connection with step S18. As shown in Fig. 10, transmission ST9 of the credit balance is performed.

Processing proceeds to subsequent step S65. When the communication processing section 26 has received the card storage information (see transmission ST10 in Fig. 10) or a credit balance (see transmission ST12 in Fig. 10), respective pieces of information are input to the CPU 22. The CPU 22 determines whether or not the received information is the card storage information, thereby branching processing. When the received information is the card storage information, processing proceeds to step S66. When the received information is a credit balance, processing proceeds to step S68.

When processing proceeds to step S66, the CPU 22 commands the second motor 36 (see Fig. 4) to drive the transfer rollers 32a, thereby transferring the provisional membership card C2 situated in the reading position to the stacker 34, whereupon the card is stored in the stacker 34. When processing proceeds further to subsequent step S67, the CPU 22 commands the communication control section 25 to cause the stored card ID transmitted to the gaming management server 10. Thus, as shown in Fig. 10, the transmission ST11 of the stored card ID is performed

Meanwhile, when processing proceeds to step S68, the CPU 22 performs processing analogous to that described in connection with step S20. Further, in steps S69 and S70, processing analogous to that described in connection with steps S21, S22 is performed.
When processing proceeds to subsequent step S71, the CPU 22 causes the updated credit balance and a corresponding card ID, which are stored in the RAM 24, transmitted to the gaming management server 10. Thus, as shown in Fig. 10, transmission ST14 of the credit balance is performed.

When processing proceeds to subsequent step S72, where update completion information is received through transmission ST21, processing proceeds to step S73. When processing proceeds to step S73, the CPU 22 and the card storage-and-transfer section 30 operates as card discharge means which discharges the provisional membership card C2, thereby performing provisional membership card discharge processing. The CPU 22 commands the second motor 36 to drive the transfer rollers 32a, thereby transferring the provisional membership card C2 situated in the reading position to the insert/discharge position. Moreover, the CPU 22 commands the first motor 35 to drive the carrying-in and carrying-out rollers 31b, 31c, thereby exposing the provisional membership card C2 to the outside by way of the insertion slot 31a (see Fig. 4), to thus return the provisional membership card C2 to the player. Thereby, operation processing of the card unit 20 is completed. Thus, during the provisional membership card discharge processing, the provisional membership card is discharged after the gaming management server 10 has updated the credit balance. When the provisional membership card discharge processing has been completed, the operation processing of the card unit 20 is completed.

operation procedures of the gaming management server 10 will be described.
In the gaming management server 10, when the provisional membership card processing is started, processing proceeds to step S81. The communication processing section 15 operates, to thus acquire a card ID. The card ID is input to the CPU 11, and processing proceeds to step S82.
When processing has proceeded to step S82, the CPU 11 acquires a credit balance by means of making reference to the provisional membership card valuable information file 17 on the basis of the input card ID, and causes the communication processing section 15 to transmit the thus-acquired credit balance and the card ID. As shown in Fig. 10, transmission ST8 of the credit balance is thereby performed.

Processing proceeds to subsequent step S83, and the communication processing section 15 receives the credit balance (by means of transmission ST14 in Fig. 10) or the stored card ID (by means of transmission ST11 shown in Fig. 10) . Then, respective pieces of information are input to the CPU 11. The CPU 11 determines whether or not the information is a credit balance or a stored card ID, and branches processing. When the information is a credit balance, processing proceeds to step S84 . In contrast, when the information is the stored card ID, processing proceeds to step S85.

When processing proceeds to step S84, the CPU 11 searches a corresponding record on the basis of the received card ID, by reference to the provisional membership card valuable information file 17, and performs update processing for updating the credit balance to the received credit balance. By means of update processing, the credit balance in the valuable information corresponding to the card ID transmitted (output) from the card unit 20 is updated to the credit balance that has undergone addition or subtraction.

When processing proceeds to subsequent step S86, the CPU 11 causes the communication processing section 15 to transmit the update completion information to the card unit 20, thereby completing operation processing. Thus, as shown in Fig. 10, transmission ST21 of the update completion information is performed.

When processing proceeds to step S85, the CPU 11 searches a corresponding record on the basis of the stored card ID by reference to the provisional membership card valuable information file 17; and performs initialization for setting the credit balance to zero, to thus complete provisional membership card processing.

Operation processing of the gaming machine 2 performed in association with the provisional membership card will be described by reference to Fig. 10.
As shown in Fig. 10, in the gaming machine 2, processing proceeds to step S201, where the credit balance is received. Then, processing proceeds to step S202, where processing (game processing) analogous to the described in connection with step S102 (see Fig. 8) is performed.
When game processing of one game has been completed, processing proceeds to step S203. The main CPU determines whether or not the credit balance is zero. When the credit balance is zero, processing proceeds to step S204, where transmission of card storage information is performed. In contrast, when the credit balance is not zero, processing proceeds to step S205, where the credit information having undergone addition or subtraction is transmitted. When processing proceeds to step S204 and transmission of card storage information is commenced, the main CPU transmits to the card unit 20 card storage information used for collecting the provisional membership card C2, thereby completing operation processing. Thereby, transmission ST10 of card storage information from the gaming machine 2 to the card unit 20 is carried out.

When processing proceeds to step S205, processing analogous to that described in connection with step S103 (see Fig. 8) is performed. The credit balance having undergone addition or subtraction is transmitted to the card unit 20. Thereby, transmission ST12 of the credit balance from the gaming machine 2 to the card unit 20 is performed.

When processing proceeds to subsequent step S206, processing analogous to that described in connection with step S104 (see Fig. 8) is performed. When the player has performed predetermined operation for starting a game, processing returns to step S202. When the game completion information is input, processing proceeds to step S207, where the game completion information is transmitted. Transmission of game completion information is analogous to that described in connection with step S105, whereby transmission ST13 of game completion information from the gaming machine 2 to the card unit 20 is performed.

Like in membership card processing, during the above-described provisional membership card processing, the credit balance is updated not only to the credit balance determined by subtracting the number of credits used for the game from the original credit balance, but also to the credit balance determined by adding the number of credits used for the game to the original credit balance. Therefore, as a result of the credit balance being subjected to addition, the game can be played repeatedly in a so-called cashless manner. Since the provisional membership card C2 is collected when the valuable balance has become zero, convenience for the player becomes deteriorated as compared with the case of the permanent membership card C1.

As mentioned above, the gaming management system 1A is configured so that the player can utilize two types of game cards (the permanent membership card C1 and the provisional membership card C2), which differ from each other in view of convenience; and so that the player information can be managed in association with the highly-convenient permanent membership card C1. Therefore, the gaming management system 1A is configured so that the players and the administrator of the game arcade can gain benefits.

Further, as a result of the permanent membership card C1 and the provisional membership card C2 being used concurrently, the player who places emphasis on convenience of cashless repeated play of a game and the player who does not have the permanent membership card C1 because he/she plays a game on rare occasions can select the way of a play. Moreover, a demand for a player who first plays a game through use of the provisional membership card C2 and desires to play a game through use of the permanent membership card C1 after having accustomed to the game can also be met. Therefore, the range of variations of the ways of play can be broadened.

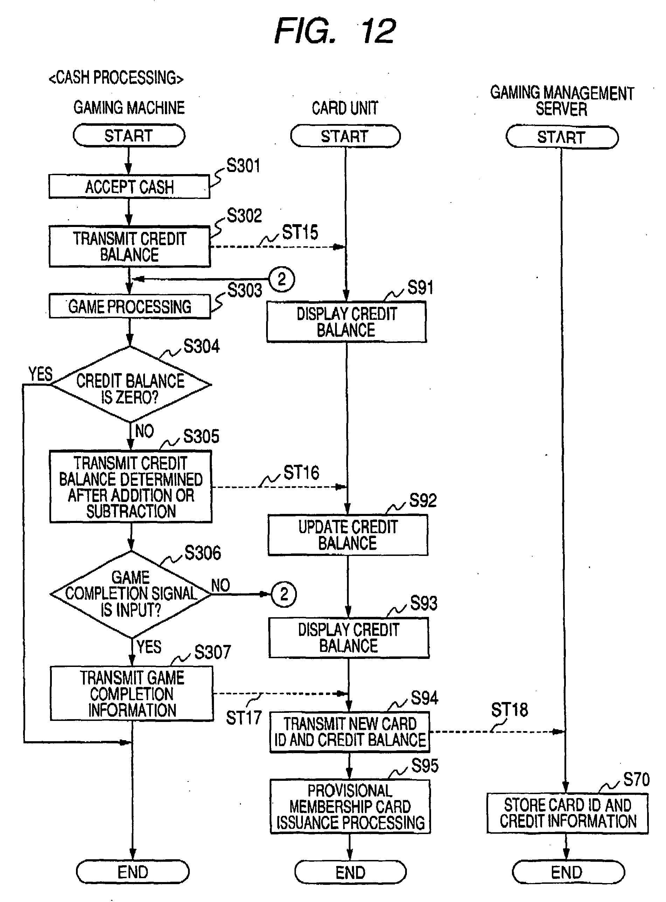

Cash Processing
During cash processing, the provisional membership card C2 is issued in accordance with the credit balance achieved after completion of a game. Operation procedures of cash processing will be described by reference to Fig. 12. Fig. 12 is a sequence chart showing an operation sequence of the gaming management system 1A (the card unit 20 and the gaming management server 10) adopted during cash processing, and an operation sequence of the corresponding gaming machine 2. As in the case of Figs. 8 and 10, Fig. 12 also shows the transmission direction of information by reference symbol ST.

When cash processing is commenced, the card unit 20 awaits receipt of the credit balance from the gaming machine 2. The gaming management server 10 awaits receipt of the card ID and the credit balance from the card unit 20.

First, the gaming machine 2 causes processing to proceed to step S301, where cash acceptance processing for accepting insertion of a game medium such as money or coins by the player is performed. When the player inserts hard currency or coins by way of the insertion slot 45 or paper money by way of the money insertion slot 46, a credit balance corresponding to the inserted game medium, such as money or coins, is determined. The gaming machine 2 then causes processing to proceed to step S302, where the credit balance is transmitted to the card unit 20. Thereby, transmission ST15 of a credit balance from the gaming machine 2 to the card unit 20 is performed.

Upon receipt of the credit balance from the gaming machine 2, the card unit 20 proceeds to step S91, where the credit balance is stored in the RAM 24 and the liquid crystal display section 29 is caused to display the credit balance.

When the credit balance has been transmitted, the gaming machine 2 causes processing to proceed to step S303, where game processing is performed. Game processing is analogous to the game processing (see Figs. 8 and 10) described in connection with step S202, and hence detailed explanation thereof is omitted. When one game has been completed, processing proceeds to step S304. When the credit balance has become zero, cash processing is completed. In the meantime, when the credit balance is not zero, processing proceeds to step S305, where the credit balance having undergone addition or subtraction is transmitted to the card unit 20. Thereby, transmission ST16 of the credit balance from the gaming machine 2 to the card unit 20 is performed.

Upon receipt of the updated credit balance from the gaming machine 2, the card unit 20 causes processing to proceed to step S92, where there is performed update processing for rewriting the credit balance stored in the RAM 24 to the credit balance received from the gaming machine 2. When processing proceeds to subsequent step S93, the liquid crystal display section 29 is caused to display the updated credit balance. Subsequently, processing pertaining to steps S92, S93 is repeated until the game completion information is received from the gaming machine 2.

when processing proceeds to step S306, where the gaming machine 2 has determined that there is an input of the game completion information, processing proceeds to step S307, where the game completion information is transmitted to the card unit 20. Thereby, transmission ST17 of the game completion information from the gaming machine 2 to the card unit 20 is performed.

Upon receipt of the game completion information from the gaming machine 2, the card unit 20 causes processing to proceed to step S94, where a card ID (a new card ID) of the newly-issued provisional membership card C2 and the credit balance stored in the RAM 24 are transmitted to the gaming management server 10. As a result, transmission ST18 of the new card ID and the credit balance corresponding to the new card ID from the card unit 20 to the gaming management server 10 is performed. The provisional membership card C2 of the embodiment is issued in sequence from the provisional membership card C2 that has been collected immediately before (first in, last out) . Therefore, the CPU 22 stores the card IDs in sequence of issuance, and transmits new card IDs to the gaming management server 10 in sequence.

When processing proceeds to step S95, the CPU 22 and the card storage-and-transfer section 30 operate as card issuing means, thereby performing provisional membership card issue processing. When provisional membership card issue processing is commenced, the CPU 22 drives the third motor 37, thereby feeding from the stacker 34 the provisional membership card C2 in sequence from the provisional membership card C2 that has been collected immediately before. Subsequently, the CPU 22 sequentially drives the second motor 36 and the third motor 35, to thus transfer the thus-fed provisional membership card C2 to the insertion-and-discharge position. The provisional membership card C2 is exposed to the outside by way of the insertion slot 31a and issued to the player, whereupon operation processing of the card unit 20 is completed.

Upon receipt of the new card ID and the credit balance, the gaming management server 10 causes processing to proceed to step S70, and performs processing for setting the new card ID to a search key; searching a corresponding record by making reference to the provisional membership card valuable information file 18; and storing the credit balance received from the card unit 20. Thus, operation processing of the gaming management server is completed.

As mentioned above, during cash processing, if there is a credit balance after completion of the game, the provisional membership card C2 corresponding to the credit balance is issued. The previously-described provisional membership card processing is performed by use of the provisional membership card C2, thereby enabling playing of a game in a cashless manner. Accordingly, a trouble, which would otherwise be caused when a game medium, such as money or coins, is directly paid out, can be eliminated by issuance of the provisional membership card C2.
In the above, the processing for the membership card is described with reference to Figs. 8 and 9, and the processing for the provisional membership card is described with reference to Figs. 10 and 11.
In the provisional membership card processing described above, the process of step S53 in the membership card processing may be implemented. That is, for example, at step S82, the CPU 11 may cause the communication processing section 15 to transmit the card error information used for discharging the provisional membership card C2 to perform transmission ST8 of the credit balance and card error information.
In the membership card processing described above, the processes of steps S203, S204, and S67 in the provisional membership card processing may be implemented. That is, for example, after the game processing in step S102, the main CPU may determine whether or not the credit balance is zero, and when the credit balance is zero, card storage information may be transmitted to the card unit for collecting the permanent membership card C1.

According to the gaming management system 1A of the embodiment, the game can be repeatedly played in a cashless manner, so that convenience for the player is enhanced. Moreover, the player information can be associated with the permanent membership card C1, and hence the administrator of the game arcade, or the like, can acquire and manage the player information.

In the embodiment, a game can be played by use of a game medium, such as money or coins, a provisional membership card, and a membership card. Therefore, the game system 100 allows a player to play the game in accordance with the player's own play style.
The valuable information is not stored in the game cards C1, C2 but is stored in and managed by the gaming management server. Malicious rewriting of valuable information, such as tampering of the game cards C1, C2, can be prevented.

In the gaming management system 1A of the first embodiment, the credit balance and the player information are stored in the data storage section 16 that serves as storage means of the present invention. However, the valuable information and the player information may be stored in IC chips M of the respective game cards C1, C2 and updated when necessary. In that case, the CPU 22 of the card unit 20 operates as storage control means. The IC chip reader/writer 33 can be caused to store (write) the valuable information and game information into the IC chips M.

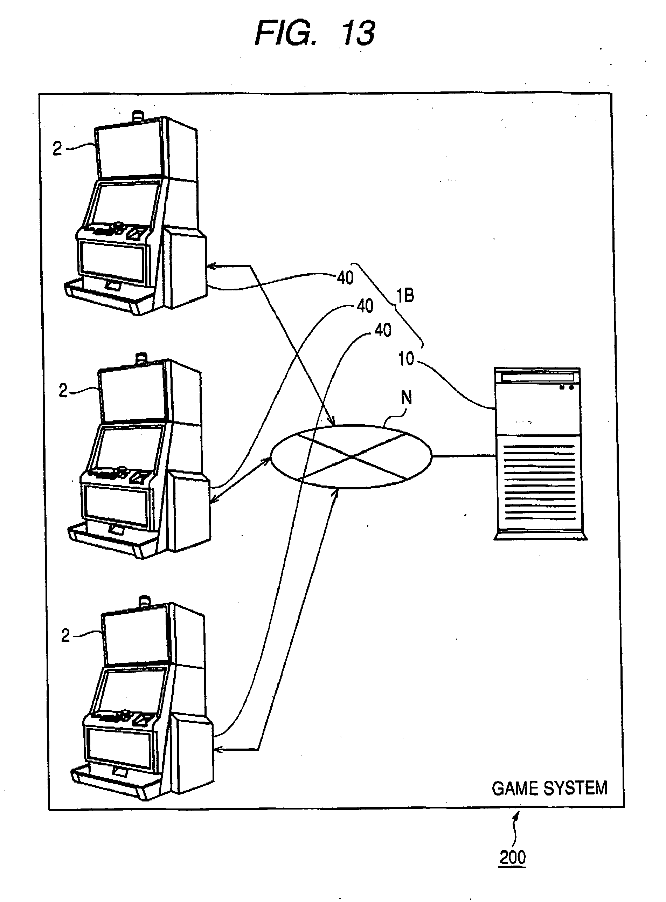

Second Embodiment
Next, a gaming management system of a second embodiment will be described. Fig. 13 is a schematic configuration diagram of a game system 200 having a gaming management system 1B of the second embodiment. In the game system 200, a plurality of card units 40 are provided for a plurality of the gaming machines 2, respectively, and the plurality of card units 40 and the gaming management server 10 are connected together by way of a computer network N such as the Internet. The gaming management system 1B of the embodiment also yields the same operation and advantages as those yielded by the gaming management system 1A of the first embodiment.

As mentioned above, the gaming management system has been described with reference to the embodiments. However, the present invention is not limited to the embodiments described above. For instance, the above-described embodiments have described, as player information, a personal identification number, the total cumulative number of times games have been played, and the total cumulative periods of time games have been played. However, the player information is not limited to these elements. For instance, the player information may be information unique to the player such as a name, a phone number, and a bank account number, or information such as the amount of money inserted by the player, the number of coins or the like inserted by the player, a time span during which the games have been played, or the day of week when the games have been played.

A timing at which the game card (the permanent membership card or the provisional membership card) is discharged from the card unit (i.e., a point in time after the valuable balance has been updated by the update means) is not limited to a point in time after the card unit has received the update completion information from the gaming management server. For instance, the timing may be a point in time after the card unit has transmitted the valuable balance and the player information to the gaming management server in association with completion of the game or a point in time after a lapse of a predetermined period of time since the gaming management server ascertained to have received the valuable balance, or the like, transmitted by the card unit. Determination of completion of the game is not limited to a case where the player has input a signal pertaining operation of the game end button, but may be a case where there is input a signal pertaining to operation of a payout button.

The mode for storing identification information in the game card is not limited to an IC chip capable of reading information in a noncontact manner, but may be information storage means of contact type. Moreover, a seal printed with a bar code or a two-dimensional code may be affixed without provision of information storage means, such as memory. Alternatively, an information display section having an information storage function may be provided by means of printing or inscribing the bar code or the two-dimensional code directly on or in an article for gaming purpose, so that the article stores game-related information. The two-dimensional code may also be called a two-dimensional bar code. For example, a QR code (registered trademark of Denso Wave Corporation) is available. This two-dimensional code includes a large volume of coded information, which is tens to hundreds the volume of information included in a bar code. When the information display section is provided as mentioned previously, a bar code reader, or the like, is provided as reading means in place of the IC chip reader.

An upper limit number of times an erroneous input is allowed may be provided for processing to be performed when the player has erroneously input a personal identification number of the membership card. When the number of erroneous inputs has reached the upper limit, the membership card may not be accepted and discharged.

The game that requires the valuable balance to commence a game is not limited to the slot game, but may be a Pachinko, Pachi-Slot game, a card game which is played while images showing cards are being displayed, a Mah-Jong game, and the like.

As described above in detail with reference to the embodiments, there is provided a gaming management system including: a gaming management server; and a card unit that is connected to the gaming management server. The gaming management server includes: a storage means for storing a valuable balance for each of players, the valuable balance being required to start a game; and an updating means for updating the valuable balance for a player specified by an identification information output from the card unit, the identification information being configured to specify the valuable balance for each of the players. The card unit includes: a reading means for reading the identification information from a membership card inserted to the card unit, the membership card being configured to be either one of a permanent membership card permanently used by the player and a provisional membership card provisionally used by the player; a card discharge means for discharging the membership card inserted to the card unit after the valuable balance is updated by the updating means; and a card issuing means for newly issuing the provisional membership card. The gaming management system further includes at least one of:
a first storage control means that is provided in the card unit and stores player information in the permanent membership card,
the player information including at least one of information unique to a player, and information relevant to the game; and
a second storage control means that is provided in the gaming management server and stores the player information in the storage means in association with the identification information.

In the gaming management system thus configured, the permanent membership card is prepared as the game card in addition to the provisional membership card. Each of the cards is discharged from the card unit after the valuable balance has been updated by the gaming management server through addition or subtraction. The provisional membership card is newly issued by the card unit. In connection with the permanent membership card, the player information is stored in the gaming management server in association with the identification information or written into the identification information.

The gaming management system may be configured that the first storage control means stores the player information in the permanent membership card, the player information including: information that indicates a number of times the game has been played by the player; information that indicates a time period during which the game has been played by the player; and information that indicates a history of the game played by the player.
The gaming management system may be configured that the second storage control means stores the player information in the storage means, the player information including information that indicates a history of the game played by the player.
According to the configurations, the player history information is stored as player information.

There is also provided a gaming management server connected to a card unit that includes a reading means for reading identification information from a membership card inserted to the card unit, the identification information being configured to specify a valuable balance for each of the players, and the valuable balance being required to start a game. The gaming management server includes: a storage means for storing a valuable balance for each of players; and an updating means for updating the valuable balance for a player specified by an identification information output from the card unit.

According to the gaming management server thus configured, the valuable balance is stored, and the valuable balance corresponding to the identification information output from the card unit is updated to the valuable balance determined through addition or subtraction.

The gaming management system may further include a storage control means that stores player information in the storage means in association with the identification information, the player information including at least one of: information that indicates a number of times the game has been played by the player; information that indicates a time period during which the game has been played by the player; and information that indicates a history of the game played by the player.
According to the configuration, the player information is stored in the storage means in association with the identification information stored in the permanent membership card.

There is also provided a card unit connected to a gaming management server that includes: a storage means for storing a valuable balance for each of players, the valuable balance being required to start a game; and an updating means for updating the valuable balance for a player specified by an identification information output from the card unit, the identification information being configured to specify the valuable balance for each of the players. The card unit includes: a reading means for reading the identification information from a membership card inserted to the card unit, the membership card being configured to be either one of a permanent membership card permanently used by the player and a provisional membership card provisionally used by the player; a card discharge means for discharging the membership card inserted to the card unit after the valuable balance is updated by the updating means; and a card issuing means for newly issuing the provisional membership card.

According to the card unit thus configured, the identification information corresponding to the valuable balance is read from the game card, and the game card is discharged after the valuable balance has been updated. Moreover, the provisional membership card is newly issued.

The card unit may further include a storage control means that stores player information in the permanent membership card, the player information including at least one of information unique to a player, and information relevant to the game.
According to the configuration, the player information can be stored in the permanent membership card.

The present invention provides a gaming management system having a configuration which enables continuous playing of a game in a so-called cashless manner and is suitable for managing information about a player who plays a game along with valuable balance, as well as a card unit and a gaming management server which constitute the gaming management system.
The foregoing description of the embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable those skilled in the art to utilize the invention in various embodiments and with various modifications as are suited to the particular use contemplated. It is intended that the scope of the invention be defined by the claims appended hereto, and their equivalents.

## Claims

1. A gaming management system comprising:
a gaming management server; and
a card unit that is connected to the gaming management server,
wherein the gaming management server comprises:
a storage means for storing a valuable balance for each of players, the valuable balance being required to start a game; and
an updating means for updating the valuable balance for a player specified by an identification information output from the card unit, the identification information being configured to specify the valuable balance for each of the players,
wherein the card unit comprises:
a reading means for reading the identification information from a membership card inserted to the card unit, the membership card being configured to be either one of a permanent membership card permanently used by the player and a provisional membership card provisionally used by the player;
a card discharge means for discharging the membership card inserted to the card unit after the valuable balance is updated by the updating means; and
a card issuing means for newly issuing the provisional membership card, and
wherein the gaming management system further comprises at least one of:
a first storage control means that is provided in the card unit and stores player information in the permanent membership card, the player information including at least one of information unique to a player, and information relevant to the game; and
a second storage control means that is provided in the gaming management server and stores the player information in the storage means in association with the identification information.

2. The gaming management system according to claim 1, wherein the first storage control means stores the player information in the permanent membership card, the player information including: information that indicates a number of times the game has been played by the player; information that indicates a time period during which the game has been played by the player; and information that indicates a history of the game played by the player.

3. The gaming management system according to claim 1, wherein the second storage control means stores the player information in the storage means, the player information including information that indicates a history of the game played by the player.

4. A gaming management server connected to a card unit that includes a reading means for reading identification information from a membership card inserted to the card unit, the identification information being configured to specify a valuable balance for each of the players, and the valuable balance being required to start a game, the gaming management server comprising:
a storage means for storing a valuable balance for each of players; and
an updating means for updating the valuable balance for a player specified by an identification information output from the card unit.

5. The gaming management server according to claim 4, further comprising a storage control means that stores player information in the storage means in association with the identification information, the player information including at least one of: information that indicates a number of times the game has been played by the player; information that indicates a time period during which the game has been played by the player; and information that indicates a history of the game played by the player.

6. A card unit connected to a gaming management server that includes: a storage means for storing a valuable balance for each of players, the valuable balance being required to start a game; and an updating means for updating the valuable balance for a player specified by an identification information output from the card unit, the identification information being configured to specify the valuable balance for each of the players, the card unit comprising:
a reading means for reading the identification information from a membership card inserted to the card unit, the membership card being configured to be either one of a permanent membership card permanently used by the player and a provisional membership card provisionally used by the player;
a card discharge means for discharging the membership card inserted to the card unit after the valuable balance is updated by the updating means; and
a card issuing means for newly issuing the provisional membership card.

7. The card unit according to claim 6, further comprising a storage control means that stores player information in the permanent membership card, the player information including at least one of information unique to a player, and information relevant to the game.
